# FASCICULE DE BREVET EUROPEEN

(11) **EP 1 247 012 B1**
(45) Date de publication et mention de la délivrance du brevet: **12.05.2004**
(21) Numéro de dépôt: 00900574.5
(22) Date de dépôt: 14.01.2000
(51) Int. Cl.: F02C 6/12, F01D 17/14

(54) **TURBOCOMPRESSEUR A AILETTES COULISSANTES AVEC SURFACES AERODYNAMIQUES ET ECRAN THERMIQUE COMBINES ET DISPOSITIF D'ACTIONNEMENT AXIAL DECOUPLE**
TURBOLADER MIT VERSCHIEBBAREN LEITSCHAUFELN, HITZESCHILD UND EINER ABNEHMBAREN, AXIALEN BETÄTIGUNGSVORRICHTUNG
TURBOCHARGER WITH SLIDING BLADES HAVING COMBINED DYNAMIC SURFACES AND HEAT SCREEN AND UNCOUPLED AXIAL ACTUATING DEVICE

(43) Date de publication de la demande: 09.10.2002
(73) Titulaire: Honeywell Garrett SA, 88150 Thaon-les-Vosges (FR)
(72) Inventeur: BERNARDINI, Luciano, Labindo, F-88390 Uxegney (FR); LOMBARD, Alain, René, F-88390 Uxegney (FR); PERRIN, Jean-Luc, Hubert, F-88150 Girmont (FR); VIOLA, Eric, Joseph, F-88000 Epinal (FR)
(74) Mandataire: Freeman, Jacqueline Carol
(86) Numéro de dépôt international: PCT/FR2000/000066
(87) Numéro de publication internationale: WO 2001/053679

(56) Documents cités:
- EP-A- 0 678 657
- GB-A- 2 271 814
- US-A- 2 918 207

## Description

### Domaine de l'invention:

La présente invention se rapporte généralement à des turbocompresseurs à géométrie variable. Plus particulièrement, un turbocompresseur est fourni ayant une admission de turbine à tuyère variable à ailettes coulissantes, avec les ailettes entrant par un écran thermique en tôle à fentes suspendu dans l'enveloppe de la turbine et ayant la roue de la turbine noyée dans celle-ci afin de fournir une surface aérodynamique dirigeant l'écoulement de gaz d'échappement dans une roue de turbine avec un disque arrière sensiblement complet, un bouclier aérodynamique et un dispositif d'actionnement axial découplé pour faciliter le montage.

### Description de l'art apparenté:

Les turbocompresseurs à grand rendement utilisent des systèmes à géométrie variable pour les admissions de tuyère de turbine afin d'augmenter la performance et le rendement aérodynamique. Les systèmes à géométrie variable pour turbocompresseurs ont typiquement été de deux types: à ailettes rotatives et à piston. Le type à ailettes rotatives exemplifié dans le brevet US numéro 5.947.681, intitulé PRESSURE BALANCED DUAL AXLE VARIABLE NOZZLE TURBOCHARGER fournit une pluralité d'ailettes individuelles placées dans la tuyère d'admission de la turbine qui peuvent tourner pour réduire ou augmenter l'aire de la tuyère et le volume d'écoulement. Le type à piston, qui est exemplifié dans les brevets US numéros 5.214.920 et 5.231.831 intitulés tous les deux TURBOCHARGER APPARATUS, et le brevet US numéro 5.441.383 intitulé VARIABLE EXHAUST DRIVEN TURBOCHARGERS, utilise un piston ou une paroi cylindrique qui est déplaçable de manière concentrique à l'axe de rotation de la turbine pour réduire l'aire de l'admission de la tuyère. Dans la plupart des cas, le turbocompresseur à géométrie variable du type à piston incorpore des ailettes avec un angle d'attaque fixe par rapport à l'écoulement d'air, qui sont soit montées sur le piston soit sur une paroi de tuyère stationnaire en face du piston et qui entrent dans des fentes dans la surface opposée durant le mouvement du piston.

Dans les turbocompresseurs à géométrie variable du type à piston de l'art antérieur, le défi a été de maximiser la performance aérodynamique équilibré par le tolérançage des surfaces de contact, surtout des ailettes et des fentes de réception qui sont soumises à une variation de température extrême et à une contrainte mécanique, ainsi que de fournir un moyen pour actionner le piston selon une configuration pouvant être facilement fabriquée.

On connaît à partir du document GB 2 271 814 un turbocompresseur à bouclier thermique, ensemble de palier et enveloppe de palier. Cet écran comprend deux sections distinctes retenues par un anneau de serrage et des fentes dans la paroi frontale pour recevoir des aubes de guidage réglables.

Dans le document EP 0 678 657 un piston comporte une pluralité d'aubes qui s'engagent dans des fentes du bouclier thermique.

### RESUME DE L'INVENTION

Conformément à la présente invention est fourni un turbocompresseur comprenant : une carcasse ayant une enveloppe de turbine recevant du gaz d'échappement d'un collecteur d'échappement d'un moteur à combustion interne au niveau d'une admission et ayant une sortie d'échappement, une enveloppe de compresseur ayant une admission d'air et une première volute, et une enveloppe centrale entre l'enveloppe de turbine et de l'enveloppe de compresseur ; une roue de turbine montée dans l'enveloppe de turbine et extrayant l'énergie du gaz d'échappement ; ladite roue de turbine étant connectée à un arbre qui s'étend de l'enveloppe de turbine à travers un alésage d'arbre dans l'enveloppe centrale et ladite roue de turbine ayant un disque arrière et des aubes multiples ; un palier monté dans l'alésage d'arbre de l'enveloppe centrale, ledit palier soutenant l'arbre pour le mouvement rotatif ; une roue à aubes connectée audit arbre en face de la roue de turbine et enfermée dans l'enveloppe de compresseur ; un piston sensiblement cylindrique, concentrique à la roue de turbine et déplaçable parallèlement à un axe de rotation de la roue de turbine ; une pluralité d'ailettes s'étendant sensiblement parallèlement à l'axe de rotation à partir d'une première extrémité du piston à proximité du disque arrière ; un écran thermique engagé au niveau de sa circonférence externe entre l'enveloppe de turbine et l'enveloppe centrale et s'étendant radialement vers l'intérieur vers l'axe de rotation, le disque arrière de la roue de turbine étant logé dans l'écran thermique pour l'écoulement lisse du gaz d'échappement dans les aubes, ledit écran thermique ayant aussi une pluralité de fentes recevant les ailettes ; et des moyens pour déplacer le piston d'une première position dans laquelle la première extrémité est à proximité de l'écran thermique sur une deuxième position dans laquelle la première extrémité est éloignée de l'écran thermique, caractérisé en outre par :
un bouclier aérodynamique situé entre le disque arrière de la roue de turbine et
l'enveloppe centrale et ayant une portion circonférentielle externe engageant une portion circonférentielle interne de l'écran thermique ; ledit bouclier aérodynamique ayant une portion circonférentielle interne engageant l'enveloppe centrale à proximité de l'alésage d'arbre.

Conformément à un mode de réalisation, l'écran thermique a une ouverture centrale dans laquelle le disque arrière est noyé et dans lequel la pluralité des fentes dans l'écran thermique ont chacune un bord arrière fermé à proximité de l'ouverture centrale.

Conformément à un deuxième mode de réalisation, l'écran thermique a une ouverture centrale dans laquelle le disque arrière est noyé et dans lequel la pluralité des fentes de l'écran thermique ont chacune un profil s'étendant au-delà d'une surface externe de l'ailette associée sensiblement jusqu'au diamètre de l'ouverture centrale, ledit profil s'étendant le long d'une surface interne de l'ailette associée se terminant au niveau de l'ouverture centrale laissant une ouverture au niveau du bord arrière joignant l'ouverture centrale.

### BREVE DESCRIPTION DES DESSINS

Les détails et caractéristiques de la présente invention seront mieux compris en rapport avec la description détaillée et des dessins sur lesquels :
La FIG.1 est une vue en élévation en coupe transversale d'un turbocompresseur utilisant une réalisation de l'invention ;
La FIG.2 est une vue de dessus d'une première réalisation de l'écran thermique;
La FIG.3 est une vue de dessus d'une deuxième réalisation de l'écran thermique ;
La FIG.4 est une vue en élévation en coupe transversale d'une réalisation de l'invention avec un bouclier aérodynamique en conjonction avec l'écran thermique ;
La FIG. 5 est une vue éclatée du dispositif d'actionnement ;
La FIG. 6 est une vue détaillée de la connexion rapide entre l'embout à rotule et l'ensemble de diaphragme.

### DESCRIPTION DETAILLEE DE L'INVENTION

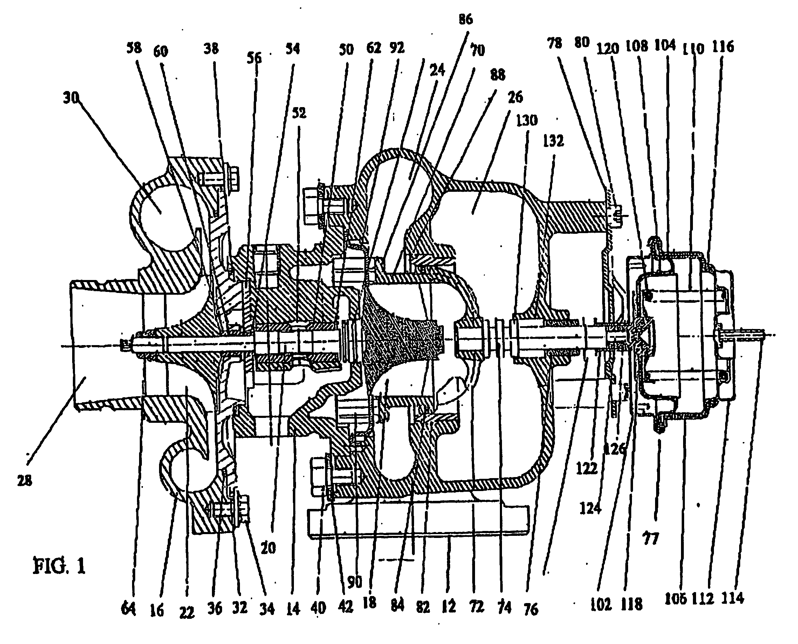

En nous référant aux dessins, la FIG.1 montre une réalisation de l'invention pour un turbocompresseur 10 qui incorpore une enveloppe de turbine 12, une enveloppe centrale 14 et une enveloppe de compresseur 16. Une roue de turbine 18 est connectée par l'arbre 20 à une roue de compresseur 22. La roue de turbine convertit l'énergie du gaz d'échappement d'un moteur à combustion interne fourni d'un collecteur d'échappement (non illustré) à une volute 24 dans l'enveloppe de turbine. Le gaz d'échappement est expansé à travers la turbine et sort de l'enveloppe de turbine par la sortie 26.

L'enveloppe de compresseur incorpore une admission 28 et une volute de sortie 30. Une plaque arrière 32 est connectée par des boulons 34 à l'enveloppe de compresseur. La plaque arrière est, à son tour, fixée à l'enveloppe centrale en utilisant des boulons (non illustrés). Un premier joint en anneau 36 est engagé entre la plaque arrière et l'enveloppe de compresseur et un deuxième joint en anneau 38 est engagé entre la plaque arrière et l'enveloppe centrale. Des boulons 40 et des rondelles de fixation 42 raccordent l'enveloppe de turbine à l'enveloppe centrale.

Des paliers de tourillon 50 montés dans l'alésage d'arbre 52 de l'enveloppe centrale soutiennent l'arbre en rotation. Un collier de serrage 54 monté sur l'arbre adjacent à la roue de compresseur engage un palier de butée 56 forcé entre l'enveloppe centrale et la plaque arrière dans la réalisation illustrée. Un manchon 58 est engagé entre le collier de serrage et la roue de compresseur. Un joint d'étanchéité rotatif 60, tel qu'un segment de piston, fournit un joint étanche entre le manchon et la plaque arrière. Un circlip 62 force le palier de tourillon dans l'alésage et un écrou 64 force la roue de compresseur et les composants de palier sur l'arbre.

Le mécanisme à géométrie variable de la présente invention inclut un piston sensiblement cylindrique 70 entrant dans l'enveloppe de turbine concentriquement aligné sur l'axe rotatif de la turbine. Le piston est longitudinalement déplaçable par un croisillon 72, ayant trois branches dans la réalisation illustrée, s'attachant au piston et s'attachant à un arbre d'actionnement 74. L'arbre d'actionnement entre dans une douille 76 s'étendant à travers l'enveloppe de turbine et se connecte à un dispositif d'actionnement 77. Sur la réalisation illustrée, le dispositif d'actionnement est monté sur des saillies sur l'enveloppe de turbine en utilisant un support 78 et des boulons 80.

Le piston glisse dans l'enveloppe de turbine par une pièce rapportée à faible friction 82. Un joint d'étanchéité cylindrique 84 est inséré entre le piston et la pièce rapportée. Le piston est déplaçable à partir d'une position fermée illustrée à la FIG.1, réduisant sensiblement l'aire de la tuyère d'admission qui va de la volute 24 à la turbine. En position complètement ouverte, une projection radiale 86 sur le piston entre dans un dépouillement 88 qui limite la course du piston.

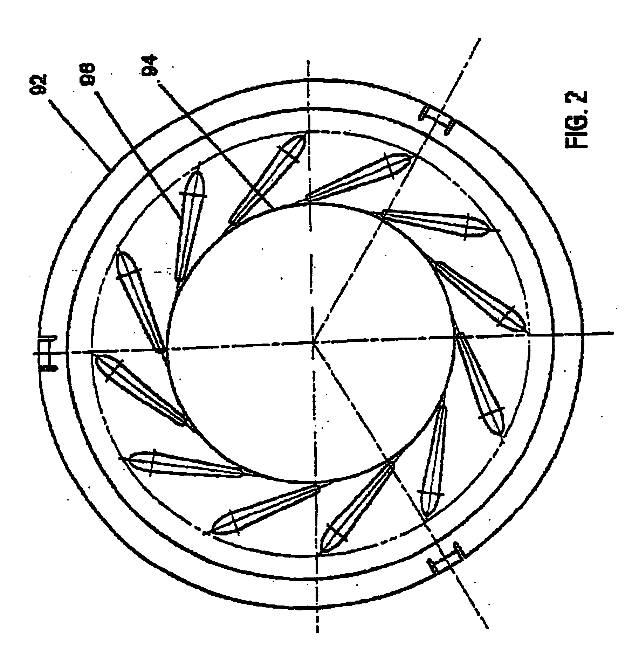

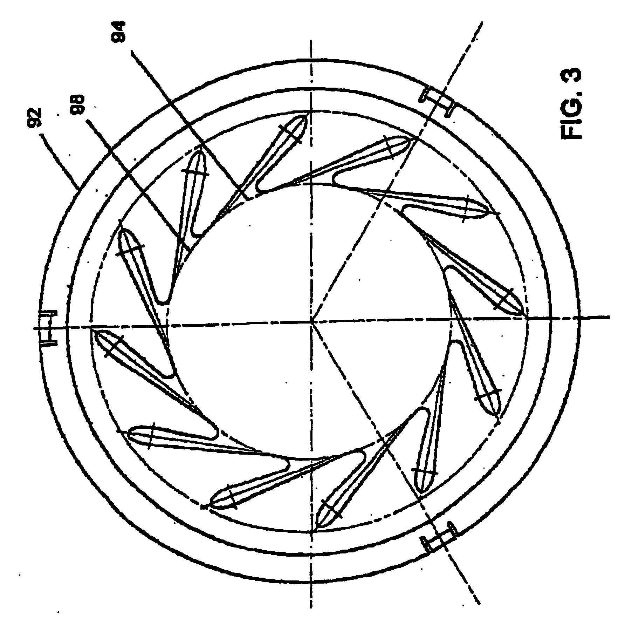

Les ailettes 90 de la tuyère s'étendent à partir de la projection radiale sur le piston. En position fermée du piston, les ailettes sont logées dans une portion dépouillée de la pièce moulée de l'enveloppe centrale. Un écran thermique 92 est engagé entre l'enveloppe de turbine et l'enveloppe centrale. L'écran est de forme adaptée pour s'étendre dans la cavité de l'enveloppe de turbine à partir de l'interface entre l'enveloppe centrale et l'enveloppe de turbine et fournir une paroi interne à la tuyère d'admission de la turbine. La roue de turbine inclut un disque arrière sensiblement complet et une ouverture centrale 94 (mieux vus sur les FIG.2 et 3 comme décrit par la suite) dans l'écran reçoit le disque arrière de la roue de turbine d'une manière noyée tour fournir une trajectoire aérodynamique sensiblement lisse de la sortie de la volute de l'enveloppe de turbine jusqu'à la roue de turbine.

La FIG.2 montre une première réalisation de l'écran thermique incorporant des fentes fermées 96 pour recevoir les ailettes 90. La circonférence de l'ouverture 94, dans laquelle le disque arrière de la roue de turbine est noyé, est en dedans de la portion des profils des fentes logeant le bord arrière des ailettes. Cette réalisation fournit un profil aérodynamique optimal, cependant, les contraintes de production et les tolérances entre les fentes et les ailettes, risquent d'empêcher l'utilisation effective de cette réalisation dans certaines applications.

La FIG.3 montre une deuxième réalisation de l'écran thermique qui fournit un profil ouvert au niveau du bord arrière des fentes adjacent à l'ouverture centrale pour réduire, dans une certaine mesure, les exigences de tolérance de ces fentes. Le profil des fentes s'étend le long et au-delà de la surface externe des aubes sensiblement jusqu'au diamètre du disque arrière de la roue de turbine, cependant, le profil le long de la surface interne de l'ailette se termine en laissant une ouverture, généralement désignée 98, joignant la fente à l'ouverture centrale. Dans les deux réalisations, le fait de noyer l'excentricité du moyeu de la roue de turbine et le disque arrière dans l'ouverture centrale, minimise le dégagement et l'espace sans ailettes entre les bords arrière des ailettes et le diamètre de la pointe de l'aubage de la roue de turbine.

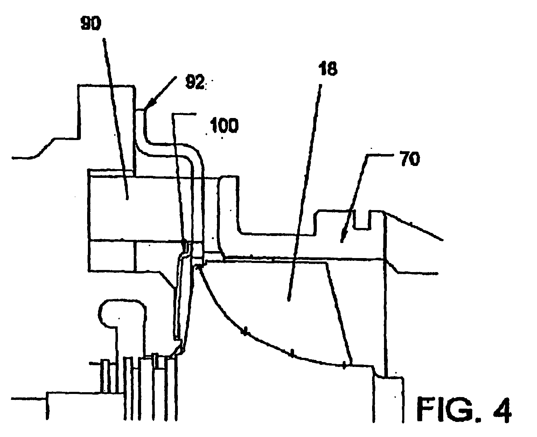

La FIG.4 montre un bouclier aérodynamique 100 engagé entre l'écran thermique et l'enveloppe centrale. Le bouclier empêche la recirculation des fuites de gaz d'échappement à partir de la cavité du disque arrière de la roue de turbine dans le dépouillement dans l'enveloppe centrale qui loge les ailettes dans la position fermée du piston. Empêcher la recirculation à partir de la cavité du disque arrière encourage un écoulement lisse de la tuyère d'admission dans les aubes de la roue de turbine. Sur la réalisation illustrée, le bouclier est fixé entre l'écran thermique et l'enveloppe centrale par l'action d'un ressort comparable à une rondelle élastique bombée.

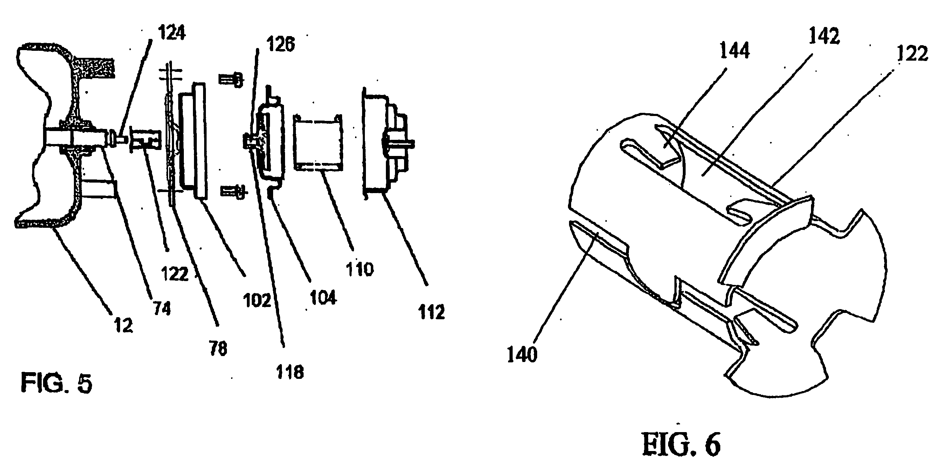

Le système d'actionnement du piston dans la réalisation illustrée sur les dessins, est un dispositif d'actionnement pneumatique 77 ayant un fond de carcasse 102 fixé à un support 78 comme illustré sur la FIG.1. Comme il est démontré sur la FIG.1 et plus en détail sur la vue éclatée de la FIG.5, un diaphragme 104 est engagé entre le fond de carcasse et un couvercle 106. Une cuvette de ressort 108 en combinaison avec le couvercle force un ressort 110 dans le but de restaurer la force sur le diaphragme. Le couvercle est maintenu en position par une chape de dispositif d'actionnement 112 qui contient une arrivée de vide 114 pour l'actionnement. Un joint d'étanchéité 116 est fourni entre la chape et le couvercle.

Un moyeu d'actionnement 118 est fixé au diaphragme par une rondelle élastique 120, qui agit aussi comme une cuvette pour le ressort 110. Le moyeu d'actionnement est connecté à l'arbre par une connexion rapide 122, qui sera décrite plus en détail par la suite. Un raccord de centrage de diamètre réduit 124 sur l'arbre entre dans un contre-alésage 126 dans le moyeu.

Comme illustré sur la Fig.1, le mouvement linéaire de l'arbre est mis en valeur par des prolongements diamétraux 130 sur l'arbre qui entrent de manière coulissante dans un alésage 132 dans l'enveloppe de turbine. Dans certaines réalisations, un déflecteur 134 est monté autour de l'arbre pour dévier les fuites de gaz par la douille 76 et les éloigner du dispositif d'actionnement.

La connexion rapide, illustrée en détail sur les FIG.5 et 6, est de la tôle façonnée en une forme sensiblement cylindrique avec une fente longitudinale 140. Des découpures opposées 142 dans la paroi du cylindre fournissent un dégagement pour des languettes 144 qui sont abaissées dans le cylindre. Un premier jeu de languettes est adapté pour s'engager dans une fente 146 dans l'arbre tandis qu'un deuxième jeu de languettes est adapté pour s'engager dans une fente 148 dans le moyeu d'actionnement. L'élasticité des languettes en tôle et du cylindre fendu permet l'insertion de l'arbre et du moyeu dans la connexion rapide par l'engagement instantané des languettes dans les fentes, éliminant ainsi le besoin de toute connexion filetée entre l'arbre et le moyeu. Le raccord d'alignement et l'alésage dans le moyeu maintiennent l'alignement axial de l'ensemble.

Un avantage supplémentaire de la configuration de la connexion rapide est la possibilité de déposer le dispositif d'actionnement du turbocompresseur sans démontage significatif, et ce qui est plus important, dans la plupart des configurations de montage, sans déposer le turbocompresseur du véhicule. Le support 78 est desserré de l'enveloppe de turbine et un outil à compression est utilisé pour faire sortir les languettes des fentes et permettre de retirer l'arbre et/ou le moyeu de la connexion rapide.

Une réalisation alternative pour la connexion rapide est une rondelle-frein en étoile qui est coincée dans une découpure dans le moyeu d'actionnement. En insérant l'arbre dans le moyeu, la rondelle-frein en étoile engage un épaulement sur l'arbre. Un bord circonférenciel de la découpure est serti pour fixer la rondelle-frein en étoile dans la découpure. La deuxième réalisation permet une longueur réduite sur l'accouplement global.

Ayant décrit l'invention en détail comme l'exige le droit en propriété industrielle, les hommes de l'art se rendront compte de modifications et de substitutions aux réalisations spécifiques divulguées aux présentes. De telles modifications et substitutions sont dans la portée de la présente invention telle que définie dans les revendications qui suivent.

## Revendications

1. Un turbocompresseur (10) comprenant:
une carcasse ayant une enveloppe de turbine (12) recevant du gaz d'échappement d'un collecteur d'échappement d'un moteur à combustion interne au niveau d'une admission et ayant une sortie d'échappement, une enveloppe de compresseur (16) ayant une admission d'air et une première volute, et une enveloppe centrale (14) entre l'enveloppé de turbine (12) et l'enveloppe de compresseur (16) ;
une roue de turbine (18) montée dans l'enveloppe de turbine (12) et extrayant de l'énergie du gaz d'échappement, ladite roue de turbine (18) étant connectée à un arbre (20) s'étendant depuis l'enveloppe de turbine (12) à travers un alésage d'arbre (52) dans l'enveloppe centrale (14) et ladite roue de turbine (18) ayant un disque arrière et des aubes multiples ;
un palier (50) monté dans l'alésage d'arbre (52) de l'enveloppe centrale (14), ledit palier soutenant l'arbre (20) pour le mouvement rotatif;
une roue à aubes (22) connectée audit arbre (20) en face de la roue de turbine (18) et enfermée dans l'enveloppe de compresseur (16) ;
un piston sensiblement cylindrique (70), concentrique à la roue de turbine (18) et déplaçable parallèlement à un axe de rotation de la roue de turbine (18) ;
une pluralité d'ailettes (90) s'étendant sensiblement parallèlement à l'axe de rotation à partir d'une première extrémité du piston à proximité du disque arrière ;
un écran thermique (92) engagé au niveau de sa circonférence externe entre l'enveloppe de turbine (12) et l'enveloppe centrale (14) et s'étendant radialement vers l'intérieur vers l'axe de rotation, le disque arrière de la roue de turbine étant noyé dans l'écran thermique (92) pour l'écoulement lisse du gaz d'échappement dans les aubes, ledit écran thermique (92) ayant en outre une pluralité de fentes (96) recevant les ailettes (90) ; et
des moyens (77) pour déplacer le piston (70) d'une première position dans laquelle la première extrémité est à proximité de l'écran thermique sur une deuxième position dans laquelle la première extrémité est éloignée de l'écran thermique,
**caractérisé en outre par** :
un bouclier aérodynamique (100) situé entre le disque arrière de la roue de turbine (18) et l'enveloppe centrale (14) et ayant une portion circonférentielle externe engageant une portion circonférentielle interne de l'écran thermique (92), ledit bouclier aérodynamique (100) ayant une portion circonférentielle interne engageant l'enveloppe centrale (14) à proximité de l'alésage d'arbre.

2. Un turbocompresseur tel que défini dans la revendication 1, dans lequel l'écran thermique (92) a une ouverture centrale dans laquelle le disque arrière est noyé et dans lequel la pluralité des fentes dans l'écran thermique (92) ont chacune un bord arrière fermé à proximité de l'ouverture centrale.

3. Un turbocompresseur tel que défini dans la revendication 1, dans lequel l'écran thermique (92) a une ouverture centrale dans laquelle le disque arrière est noyé et dans lequel la pluralité des fentes de l'écran thermique (92) ont chacune un profil s'étendant au-delà d'une surface externe de l'ailette associée sensiblement jusqu'au diamètre de l'ouverture centrale, ledit profil s'étendant le long d'une surface interne de l'ailette associée se terminant au niveau de l'ouverture centrale laissant une ouverture au niveau du bord arrière joignant l'ouverture centrale.

4. Un turbocompresseur tel que défini dans l'une quelconque des revendications précédentes, dans lequel les moyens pour déplacer le piston comprennent :
un croisillon (72) ayant une pluralité de branches attachées au piston, lesdites branches convergeant vers un arbre d'actionnement concentrique à l'axe de rotation ;
un dispositif d'actionnement (77) ayant un moyeu d'actionnement (118) ; et
un moyen de connexion rapide (122) pour connecter l'arbre d'actionnement et le moyeu d'actionnement

5. Un turbocompresseur tel que défini dans la revendication 4, dans lequel le dispositif d'actionnement est un dispositif d'actionnement pneumatique ayant un diaphragme connecté au moyeu d'actionnement (118).

6. Un turbocompresseur tel que défini dans la revendication 4, dans lequel le moyen de connexion rapide comprend un cylindre en tôle ayant une fente longitudinale (140) et au moins une paire de languettes élastiques (144) espacées selon une orientation longitudinalement opposée le long de et s'étendant dans le cylindre, l'une de la paire de languettes adaptée pour engager une fente circonférentielle (146) dans l'arbre d'actionnement et la deuxième de la paire de languettes étant adaptée pour engager une fente circonférentielle (148) dans le moyeu d'actionnement (118).

7. Un turbocompresseur tel que défini dans la revendication 6, dans lequel le moyeu d'actionnement (118) inclut un contre-alésage (126) adapté pour recevoir, de manière bien ajustée, un raccord d'alignement (124) s'étendant à partir de l'arbre d'actionnement.

## Patentansprüche

1. Turbolader (10), der Folgendes umfasst:
einen Mantel mit einem Turbinengehäuse (12), das Abgas aus einem Abgaskrümmer eines Verbrennungsmotors an einem Einlass empfängt und einen Ausströmauslass aufweist, einem Verdichtergehäuse (16), das einen Lufteintritt und einen ersten Diffusor aufweist, sowie einem mittleren Gehäuse (14) zwischen dem Turbinengehäuse (12) und dem Verdichtergehäuse (16);
ein im Turbinengehäuse (12) angebrachtes Turbinenrad (18), das Abgasenergie abzieht und mit einer Welle (20) verbunden ist, die sich vom Turbinengehäuse (12) durch eine Wellenbohrung (52) im mittleren Gehäuse (14) erstreckt, wobei das Turbinenrad (18) eine hintere Scheibe und mehrere Schaufeln aufweist;
ein in der Wellenbohrung (52) des mittleren Gehäuses (14) angebrachtes Lager (50), das die Welle (20) zur Drehbewegung stützt;
ein Schaufelrad (22), das gegenüber dem Turbinenrad (18) mit der Welle (20) verbunden und im Verdichtergehäuse (16) eingeschlossen ist;
einen im Wesentlichen zylindrischen Kolben (70), der zum Turbinenrad (18) konzentrisch ist und parallel zu einer Drehachse des Turbinenrads (18) verschoben werden kann;
mehrere Leitschaufeln (90), die sich von einem ersten Kolbenende in der Nähe der hinteren Scheibe im Wesentlichen parallel zur Drehachse erstrecken;
einen Hitzeschild (92), der an seinem Außenumfang zwischen dem Turbinengehäuse (12) und dem mittleren Gehäuse (14) in Eingriff steht und sich radial nach innen zur Drehachse erstreckt, wobei die hintere Scheibe des Turbinenrads für eine gleichmäßige Strömung des Abgases in den Schaufeln im Hitzeschild (92) eingelassen ist, wobei der Hitzeschild (92) des Weiteren mehrere Schlitze (96) aufweist, die die Leitschaufeln (90) aufnehmen, und
Mittel (77) zur Verschiebung des Kolbens (70) aus einer ersten Position, in der sich das erste Ende in der Nähe des Hitzeschilds befindet, in eine zweite Position, in der das erste Ende vom Hitzeschild entfernt ist,
weiterhin **gekennzeichnet durch**
einen aerodynamischen Schild (100), der sich zwischen der hinteren Scheibe des Turbinenrads (18) und dem mittleren Gehäuse (14) befindet und
einen Außenumfangsteil aufweist, der einen Innenumfangsteil des Hitzeschilds (92) in Eingriff nimmt, wobei der aerodynamische Schild (100) einen das mittlere Gehäuse (14) in der Nähe der Wellenbohrung in Eingriff nehmenden Umfangsteil aufweist.

2. Turbolader nach Anspruch 1, bei dem der Hitzeschild (92) eine mittlere Öffnung aufweist, in die die hintere Scheibe eingelassen ist, und bei dem die mehreren Schlitze im Hitzeschild (92) jeweils einen geschlossenen hinteren Rand in der Nähe der mittleren Öffnung aufweisen.

3. Turbolader nach Anspruch 1, bei dem der Hitzeschild (92) eine mittlere Öffnung aufweist, in die die hintere Scheibe eingelassen ist, und bei dem die mehreren Schlitze des Hitzeschilds (92) jeweils ein Profil aufweisen, das sich über eine Außenfläche der zugehörigen Leitschaufel hinaus bis zum Durchmesser der mittleren Öffnung erstreckt, wobei das Profil, das sich entlang einer Innenfläche der zugehörigen Leitschaufel erstreckt, an der mittleren Öffnung abschließt, wobei eine Öffnung am hinteren Rand verbleibt, die mit der mittleren Öffnung verbunden ist.

4. Turbolader nach einem der vorhergehenden Ansprüche, bei dem die Mittel zum Verschieben des Kolbens folgendes umfassen:
ein Armkreuz (72) mit mehreren am Kolben befestigten Schenkeln, die zu einer zur Drehachse konzentrischen Betätigungswelle zusammenlaufen;
eine Betätigungsvorrichtung (77) mit einer Betätigungsnabe (118); und
ein Schnellverbindungsmittel (122) zur Verbindung der Betätigungswelle und der Betätigungsnabe.

5. Turbolader nach Anspruch 4, bei dem die Betätigungsvorrichtung eine Druckluftbetätigungsvorrichtung mit einer mit der Betätigungsnabe (118) verbundenen Membran ist.

6. Turbolader nach Anspruch 4, bei dem das Schnellverbindungsmittel einen Zylinder aus Blech umfasst, der einen Längsschlitz (140) und mindestens ein Paar elastischer Zungen (144) aufweist, die in einer entgegensetzten Längsausrichtung entlang dem Zylinder beabstandet sind und sich in letzteren erstrecken, wobei eine des Paares Zungen zum Eingriff in einen Umfangsschlitz (146) in der Betätigungswelle und die zweite des Paares Zungen zum Eingriff in einen Umfangsschlitz (148) in der Betätigungsnabe (118) ausgeführt ist.

7. Turbolader nach Anspruch 6, bei dem die Betätigungsnabe (118) eine Gegenbohrung (126) enthält, die zur gut passenden Aufnahme eines sich von der Betätigungswelle erstreckenden Ausrichtungsanschlusses (124) ausgeführt ist.

## Claims

1. A turbocharger (10) comprising:
a casing having a turbine housing (12) receiving exhaust gas from an exhaust head of an internal combustion engine at an intake and having an exhaust outlet, a compressor housing (16) having an air intake and a first volute, and a central housing (14) between the turbine housing (12) and the compressor housing (16);
a turbine wheel (18) mounted in the turbine housing (12) and extracting the energy from the exhaust gas, the said turbine wheel (18) being connected to a shaft (20) extending from the turbine housing (12) through a shaft bore (52) in the central housing (14) and the said turbine wheel (18) having a rear disc and multiple vanes;
a bearing (50) mounted in the shaft bore (52) of the central housing (14), the said bearing supporting the shaft (20) for rotational movement;
a vane wheel (22) connected to the said shaft (20) facing the turbine wheel (18) and enclosed in the compressor housing (16);
a substantially cylindrical piston (70), concentric to the turbine wheel (18) and able to be displaced parallel to an axis of rotation of the turbine wheel (18);
a plurality of blades (90) extending substantially parallel to the axis of rotation from a first end of the piston in the proximity of the rear disc;
a heat screen (92) engaged at its external circumference between the turbine housing (12) and the central housing (14) and extending radially inwards towards the axis of rotation, the rear disc of the turbine wheel being embedded in the heat screen (92) for the smooth flow of the exhaust gas in the vanes, the said heat screen (92) also having a plurality of slots (96) receiving the blades (90); and
means (77) for displacing the piston (70) from a first position in which the first end is in the proximity of the heat screen to a second position in which the first end is remote from the heat screen,
further **characterised by**:
an aerodynamic shield (100) located between the rear disc of the turbine wheel (18) and the central housing (14) and having an external circumferential portion engaging an internal circumferential portion of the heat screen (92); the said aerodynamic shield (100) having an internal circumferential portion engaging the central housing (14) in the proximity of the shaft bore.

2. A turbocharger as defined in claim 1, wherein the heat screen (92) has a central orifice in which the rear disc is embedded and wherein the plurality of slots in the heat screen (92) each have a closed rear edge in the proximity of the central orifice.

3. A turbocharger as defined in claim 1, wherein the heat screen (92) has a central orifice in which the rear disc is embedded and wherein the plurality of slots of the heat screen (92) each have a profile extending beyond an external surface of the associated blade substantially as far as the diameter of the central orifice, the said profile extending along an internal surface of the associated blade ending at the central orifice leaving an orifice at the rear edge connecting to the central orifice.

4. A turbocharger as defined in any one of the preceding claims, wherein the means for displacing the piston comprises:
a cross-piece (72) having a plurality of branches attached to the piston, the said branches converging towards an actuating shaft concentric to the axis of rotation;
an actuating device (77) having an actuating hub (118); and
a quick-connect connection means (122) to connect the actuating shaft and the actuating hub.

5. A turbocharger as defined in claim 4, wherein the actuating device is a pneumatic actuating device having a diaphragm connected to the actuating hub (118).

6. A turbocharger as defined in claim 4, wherein the quick-connect connection means has a cylinder made of sheet metal having a longitudinal slot (140) and at least one pair of elastic tongues (144) spaced apart in an opposite longitudinal orientation along the cylinder and extending into it, one of the pair of tongues being adapted to engage a circumferential slot (146) in the actuating shaft and the second of the pair of tongues being adapted to engage a circumferential slot (148) in the actuating hub (118).

7. A turbocharger as defined in claim 6, wherein the actuating hub (118) includes a counter bore (126) adapted to receive, in a close-fitting manner, an alignment connection (124) extending from the actuating shaft.
